# FASCICULE DE BREVET EUROPEEN

(11) **EP 3 271 166 B1**
(45) Date de publication et mention de la délivrance du brevet: **15.07.2020**
(21) Numéro de dépôt: 16715010.1
(22) Date de dépôt: 10.03.2016
(51) Int. Cl.: B32B 5/00, B32B 5/02, B32B 5/14, B32B 5/22, B32B 5/26, B32B 7/00, B32B 7/02, B32B 7/04, B32B 7/10, B32B 19/00, B32B 27/00, B32B 27/06, B32B 27/12, B32B 27/28, B32B 27/30, B32B 1/00, B32B 3/00, B32B 3/02, B32B 3/26

(54) **ELÉMENT THERMOFORMÉ DE PROTECTION ACOUSTIQUE POUR VÉHICULE AUTOMOBILE**
THERMOGEFORMTES SCHALLSCHUTZELEMENT FÜR EIN KRAFTFAHRZEUG
THERMOFORMED SOUND PROTECTION ELEMENT FOR A MOTOR VEHICLE

(30) Priorité: 19.03.2015 FR 1552280
(43) Date de publication de la demande: 24.01.2018
(73) Titulaire: TREVES Products, Services & Innovation, 75008 Paris (FR)
(72) Inventeur: LEMAIRE, Dominique, 08190 Villiers devant le Thour (FR); CRIGNON, Guillaume, 51500 Sillery (FR); CAPRON, Christophe, 51490 Epoye (FR)
(74) Mandataire: Sayettat, Julien Christian
(86) Numéro de dépôt international: PCT/FR2016/050542
(87) Numéro de publication internationale: WO 2016/146919

(56) Documents cités:
- EP-A1- 0 077 987
- CN-A- 104 264 596
- FR-A1- 2 983 148
- US-A- 4 622 260
- US-A1- 2008 064 775

## Description

L'invention concerne un élément thermoformé de protection acoustique pour véhicule automobile et un procédé de réalisation d'un tel élément.

Il est connu de réaliser un élément thermoformé - par exemple sous forme d'un insonorisant de tablier ou d'une garniture latérale de coffre - de protection acoustique pour véhicule automobile, ledit élément comprenant deux couches fibreuses poreuses entre lesquelles est disposée une couche intermédiaire à base de broyat de matériau recyclé.

Il est notamment connu de réaliser la couche intermédiaire à base de broyat de déchets de production, notamment de type film plastique, moquette, etc.

FR 2 983 148 divulgue un composant de protection acoustique pour véhicule automobile, ledit composant comprenant une couche d'étanchéité de masse surfacique élevée disposée sur une couche élastiquement compressible, lesdites couches formant respectivement la masse et le ressort d'un système d'isolation de type masse-ressort, ledit composant étant caractérisé en ce que ladite couche d'étanchéité est à base de polyvinyle butyral.

La couche de broyat, déposée par saupoudrage, présente une masse surfacique sensiblement uniforme, sachant que l'élément est généralement disposé en regard d'une surface hétérogène en émission sonore.

Afin d'assurer une protection acoustique adéquate, il est nécessaire de déposer une quantité de broyat prenant en compte la portion de surface la plus émissive.

Il en résulte l'obtention d'un élément de masse importante contribuant à alourdir le véhicule, ce qui est préjudiciable en matière de consommation de carburant.

L'invention a pour but de pallier cet inconvénient.

A cet effet, et selon un premier aspect, l'invention propose un élément thermoformé - notamment sous forme d'un insonorisant de tablier ou d'une garniture latérale de coffre - de protection acoustique pour véhicule automobile, ledit élément comprenant deux couches fibreuses poreuses d'endroit et d'envers - notamment sous forme de moquette, de feutre ou de non tissé -, ledit élément présentant en vue de face :
- une zone lourde, de haute protection acoustique, comprenant une première couche intermédiaire à base de broyat de matériau recyclé disposée entre lesdites couches fibreuses,
- au moins une zone légère, de faible protection acoustique,
ladite zone légère :
- comprenant une deuxième couche intermédiaire à base de broyat de matériau recyclé disposée entre lesdites couches fibreuses, ladite deuxième couche présentant une masse surfacique inférieure à celle de ladite première couche, de manière à former une zone légère de premier type. L'élément peut comprendre une zone légère de deuxième type étant dépourvue de couche intermédiaire, lesdites couches fibreuses étant disposées l'une au contact de l'autre, de manière à former cette zone légère de deuxième type.

L'agencement proposé permet de ne mettre sur chaque zone de l'élément que le juste nécessaire en couche intermédiaire, voire de ne pas mettre de couche intermédiaire, ceci en fonction des variations d'émissivité sonore de la surface dont on veut se protéger acoustiquement, ce qui permet de réaliser des éléments allégés par rapport à ceux connus de l'art antérieur.

Selon un deuxième aspect, l'invention propose un procédé de réalisation d'un tel élément.

D'autres particularités et avantages de l'invention apparaîtront dans la description qui suit, faite en référence aux figures jointes, dans lesquelles :

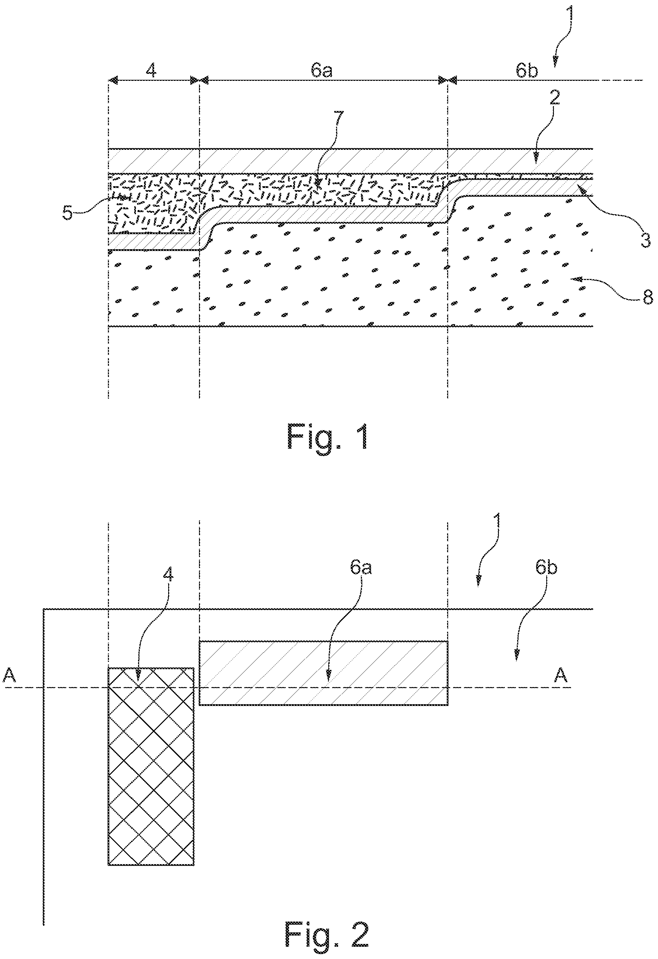

- la figure 1 est une vue schématique en coupe partielle - selon la ligne AA de la figure 2 - d'un élément selon une réalisation,
- la figure 2 est une vue schématique de face de l'élément de la figure 1.

En référence aux figures, on décrit un élément 1 thermoformé - notamment sous forme d'un insonorisant de tablier ou d'une garniture latérale de coffre - de protection acoustique pour véhicule automobile, ledit élément comprenant deux couches fibreuses poreuses d'endroit 2 et d'envers 3 - notamment sous forme de moquette, de feutre ou de non tissé -, ledit élément présentant en vue de face :
- une zone lourde 4, de haute protection acoustique, comprenant une première couche intermédiaire 5 à base de broyat de matériau recyclé disposée entre lesdites couches fibreuses,
- au moins une zone légère 6a,6b de faible protection acoustique,
ladite zone légère :
- comprenant une deuxième couche intermédiaire 7 à base de broyat de matériau recyclé disposée entre lesdites couches fibreuses, ladite deuxième couche présentant une masse surfacique inférieure à celle de ladite première couche, de manière à former une zone légère de premier type 6a,
- ou bien étant dépourvue de couche intermédiaire, lesdites couches fibreuses étant disposées l'une au contact de l'autre, de manière à former une zone légère de deuxième type 6b.

Selon la réalisation représentée, l'élément 1 comprend une zone lourde 4, au moins une zone légère de premier type 6a et au moins une zone légère de deuxième type 6b.

Selon une réalisation, la première couche 5 présente une résistance au passage de l'air, mesurée selon la norme ISO 9053 / méthode B par écoulement d'air alternatif, supérieure à 4000 N.s.m⁻³ de manière à présenter une étanchéité permettant une isolation acoustique.

Selon une réalisation, l'élément 1 comprend en outre, lorsque la première couche 5 est étanche, une couche externe 8 - notamment à base de de mousse ou de feutre - élastiquement compressible disposée sous la couche fibreuse d'envers 3, au moins en regard de la zone lourde 4, de sorte que ledit élément forme un complexe d'isolation acoustique de type « masse ressort ».

Selon une variante, une des couches fibreuses 2,3 est elle-même élastiquement compressible de manière à jouer le rôle de ressort dans un système « masse ressort ».

Selon une réalisation, la première couche 5 comprend des déchets de haute densité à base d'élastomère thermoplastique - notamment de type éthylène propylène diène monomère -, chargé avec une charge minérale.

Sa masse surfacique est par exemple comprise entre 1000 et 2000 g/m².

Selon une réalisation, la deuxième couche 7 comprend des déchets de basse densité à base de fibres.

Sa masse surfacique est par exemple comprise entre 100 et 500 g/m².

Selon une réalisation, les couches fibreuses 2,3 sont co-aiguilletées de manière à assurer la cohésion des différentes couches 2,3,5,7.

Selon une réalisation, au moins une couche intermédiaire 5,7 est à base de polyvinyl butyral (PVB).

Une utilisation classique du PVB consiste à l'interposer en film entre deux couches de verre, notamment pour réaliser des pare-brise de véhicules automobiles ou des vitres d'immeubles.

Une caractéristique de cette matière est son élasticité très importante qui permet de retenir le verre cassé et qui évite aux couches de verre de voler en éclats lors d'un choc.

Une telle élasticité permet d'envisager son thermoformage avec de forts étirements, sans ruptures nuisant à une étanchéité recherchée pour la couche intermédiaire 5,7.

En outre, le PVB présente la particularité d'avoir une densité de l'ordre de 1,1, bien supérieure à celle des broyats utilisés dans l'art antérieur, ce qui permet de disposer d'une couche intermédiaire 5,7 de bien moindre volume que ce qui est connu de l'art antérieur, et donc d'optimiser le volume disponible par ailleurs dans le véhicule.

Enfin, le PVB permet d'éviter un co-aiguilletage, ceci du fait de son caractère fortement collant qui peut suffire à assurer la liaison des couches fibreuses 2,3 entre elles.

On décrit enfin un procédé de réalisation d'un élément 1, ledit procédé comprenant les étapes suivantes :
- prévoir au moins un broyat issu du recyclage,
- prévoir deux rouleaux de couche fibreuse 2,3,
- déposer ledit au moins un broyat par saupoudrage sur un desdits rouleaux actionné en déroulement, de manière à réaliser des zones légères 6a,6b et des zones lourdes 4, et recouvrir le saupoudrage par l'autre desdits rouleaux actionnée en déroulement,
- découper un flan dans le complexe obtenu,
- thermoformer ledit flan à la géométrie de l'élément 1 à obtenir.

Le thermoformage peut être suivi d'une découpe périphérique et/ou interne de finition éventuelle.

On peut réaliser un co-aiguilletage du complexe obtenu avant découpe du flan, afin d'assurer une cohésion entre les couches poreuses 2,3.

Dans le cas de deux couches intermédiaires 5,7, on peut prévoir deux saupoudreuses pourvues chacune d'un broyat, leur utilisation étant alternée dans le temps ou bien leur positionnement étant décalé, de manière à réaliser un saupoudrage léger en zone légère de premier type 6a et un saupoudrage lourd en zone lourde 4.

On peut aussi prévoir des laps de temps où il n'est pas réalisé de saupoudrage, ou bien une bande de rouleau disposée à distance de la saupoudreuse, de manière à réaliser des zones légères de deuxième type 6b dépourvues de couche intermédiaire.

## Revendications

1. Elément (1) thermoformé - notamment sous forme d'un insonorisant de tablier ou d'une garniture latérale de coffre - de protection acoustique pour véhicule automobile, ledit élément comprenant deux couches fibreuses poreuses d'endroit (2) et d'envers (3) - notamment sous forme de moquette, de feutre ou de non tissé -, ledit élément étant **caractérisé en ce qu'**il présente en vue de face :
• une zone lourde (4), de haute protection acoustique, comprenant une première couche intermédiaire (5) à base de broyat de matériau recyclé disposée entre lesdites couches fibreuses,
• au moins une zone légère (6a,6b) de faible protection acoustique, comprenant une deuxième couche intermédiaire (7) à base de broyat de matériau recyclé disposée entre lesdites couches fibreuses, ladite deuxième couche présentant une masse surfacique inférieure à celle de ladite première couche, de manière à former une zone légère de premier type (6a).

2. Elément selon la revendication 1, **caractérisé en ce qu'**il comprend une zone légère de deuxième type (6b) dépourvue de couche intermédiaire, les couches fibreuses (2, 3) étant disposées l'une contre l'autre, de manière à former ladite zone légère de deuxième type.

3. Elément selon l'une des revendications 1 ou 2, **caractérisé en ce que** la première couche (5) présente une résistance au passage de l'air, mesurée selon la norme ISO 9053 / méthode B par écoulement d'air alternatif, supérieure à 4000 N.s.m⁻³ de manière à présenter une étanchéité permettant une isolation acoustique.

4. Elément la revendication 3, **caractérisé en ce qu'**il comprend en outre une couche externe (8) - notamment à base de mousse ou de feutre - élastiquement compressible disposée sous la couche fibreuse d'envers (3), au moins en regard de la zone lourde (4), de sorte que ledit élément forme un complexe d'isolation acoustique de type « masse ressort ».

5. Elément selon l'une quelconque des revendications 1 à 4, **caractérisé en ce que** la première couche (5) comprend des déchets de haute densité à base d'élastomère thermoplastique - notamment de type éthylène propylène diène monomère -, chargé avec une charge minérale.

6. Elément selon l'une quelconque des revendications 1 à 5, **caractérisé en ce que** la deuxième couche (7) comprend des déchets de basse densité à base de fibres.

7. Elément selon l'une quelconque des revendications 1 à 6, **caractérisé en ce que** les couches fibreuses (2,3) sont co-aiguilletées de manière à assurer la cohésion des différentes couches (2,3,5,7).

8. Elément selon l'une quelconque des revendications 1 à 7, **caractérisé en ce qu'**au moins une couche intermédiaire (5,7) est à base de polyvinyl butyral (PVB).

9. Procédé de réalisation d'un élément selon l'une quelconque des revendications 1 à 8, **caractérisé en ce qu'**il comprend les étapes suivantes :
• prévoir au moins un broyat issu du recyclage,
• prévoir deux rouleaux de couche fibreuse (2,3),
• déposer ledit au moins un broyat par saupoudrage sur un desdits rouleaux actionné en déroulement, de manière à réaliser des zones légères (6a,6b) et des zones lourdes (4), et recouvrir le saupoudrage par l'autre desdits rouleaux actionnée en déroulement,
• découper un flan dans le complexe obtenu,
• thermoformer ledit flan à la géométrie de l'élément (1) à obtenir.

## Patentansprüche

1. Thermogeformtes Element (1) - insbesondere in Form eines Spritzwanddämmung oder einer seitlichen Kofferraumverkleidung - zum Schallschutz für ein Kraftfahrzeug, wobei das Element zwei poröse, faserige vordere (2) und hintere (3) Schichten - insbesondere in Form eines Teppichs, Filzes oder Vlieses - umfasst, wobei das Element **dadurch gekennzeichnet ist, dass** es in der Vorderansicht Folgendes aufweist:
• eine schwere Zone (4) mit starkem Schallschutz, eine erste Zwischenschicht (5) auf Basis eines Mahlguts aus recyceltem Material umfassend, das zwischen den faserigen Schichten angeordnet ist,
• mindestens eine leichte Zone (6a, 6b) mit schwachem Schallschutz, eine zweite Zwischenschicht (7) auf Basis eines Mahlguts aus recyceltem Material umfassend, das zwischen den faserigen Schichten angeordnet ist, wobei die zweite Schicht ein Flächengewicht aufweist, das geringer als jenes der ersten Schicht ist, um eine leichte Zone eines ersten Typs (6a) zu bilden.

2. Element nach Anspruch 1, **dadurch gekennzeichnet, dass** es eine leichte Zone eines zweiten Typs (6b) umfasst, die mit keiner Zwischenschicht versehen ist, wobei die faserigen Schichten (2, 3) aneinander in der Art angeordnet sind, um die leichte Zone eines zweiten Typs zu bilden.

3. Element nach einem der Ansprüche 1 oder 2, **dadurch gekennzeichnet, dass** die erste Schicht (5) eine Beständigkeit gegenüber Luftpermeabilität, der gemäß der Norm ISO 9053 / Verfahren B durch Luftwechselstrom gemessen wird, von mehr als 4 000 N.s.m⁻³ aufweist, um eine Dichte aufzuweisen, die eine Schalldämmung ermöglicht.

4. Element nach Anspruch 3, **dadurch gekennzeichnet, dass** es weiter eine elastisch komprimierbare Außenschicht (8)
- insbesondere auf Basis von Schaumstoff oder Filz - umfasst, die unter der hinteren (3) faserigen Schicht, mindestens gegenüber der schweren Zone (4) angeordnet ist, sodass das Element einen Schalldämmungskomplex vom Typ einer "federnden Masse" bildet.

5. Element nach einem der Ansprüche 1 bis 4, **dadurch gekennzeichnet, dass** die erste Schicht (5) Abfälle von hoher Dichte auf Basis eines thermoplastischen Elastomers
- insbesondere vom Typ Ethylen-Propylen-Dien-Monomer -, umfasst, das mit einem Mineralfüllstoff gefüllt ist.

6. Element nach einem der Ansprüche 1 bis 5, **dadurch gekennzeichnet, dass** die zweite Schicht (7) Abfälle von geringer Dichte auf Basis von Fasern umfasst.

7. Element nach einem der Ansprüche 1 bis 6, **dadurch gekennzeichnet, dass** die faserigen Schichten (2, 3) gemeinsam vernadelt sind, um für eine Kohäsion der verschiedenen Schichten (2, 3, 5, 7) zu sorgen.

8. Element nach einem der Ansprüche 1 bis 7, **dadurch gekennzeichnet, dass** mindestens eine Zwischenschicht (5, 7) auf Basis von Polyvinylbutyral (PVB) ist.

9. Verfahren zur Herstellung eines Elements nach einem der Ansprüche 1 bis 8, **dadurch gekennzeichnet, dass** es die folgenden Schritte umfasst:
• Vorsehen mindestens eines Mahlguts aus dem Recycling,
• Vorsehen von zwei Rollen einer faserigen Schicht (2, 3),
• Abscheiden des mindestens einen Mahlguts durch Streuen auf eine der zum Abrollen betätigten Rollen, um leichte Zonen (6a, 6b) und schwere Zonen (4) zu realisieren, und Abdecken des Streuguts durch die andere der zum Abrollen betätigten Rolle,
• Ausschneiden eines Rohlings aus dem erhaltenen Komplex,
• Thermoformen des Rohlings auf die Geometrie des zu erhaltenden Elements (1).

## Claims

1. Thermoformed sound protection element (1) - in particular in the form of a soundproof deck or a boot side lining - for a motor vehicle, said element comprising two fibrous, porous face (2) and back (3) layers - in particular in the form of a carpet, felt or non-woven, said element being **characterised in that** it has in the front view:
- a heavy zone (4), of high sound protection, comprising a first intermediate layer made from crushed recycled material (5) disposed between said fibrous layers,
- at least one light zone (6a, 6b) of low sound protection, comprising a second intermediate layer made from crushed recycled material (7) disposed between said fibrous layers, said second layer having a surface mass less than that of said first layer, so as to form a light zone of a first type (6a).

2. Element according to claim 1, **characterised in that** it comprises a light zone of a second type (6b) with no intermediate layer, the fibrous layers (2, 3) being disposed against one another, so as to form said light zone of a second type.

3. Element according to one of claims 1 or 2, **characterised in that** the first layer (5) has a resistance to the passage of air, measured according to the standard ISO 9053 / method B by alternative airflow, greater than 4000 N.s.m⁻³ so as to have a sealing allowing sound insulation.

4. Element according to claim 3, **characterised in that** it further comprises an outer layer (8) - in particular, with a foam or felt base - elastically compressible disposed under the fibrous face layer (3), at least facing the heavy zone (4), such that said element forms a sound insulation complex of the "mass-spring" type.

5. Element according to any one of claims 1 to 4, **characterised in that** the first layer (5) comprises high-density waste made from thermoplastic elastomer - in particular of the ethylene propylene diene monomer type-, filled with a mineral filler.

6. Element according to any one of claims 1 to 5, **characterised in that** the second layer (7) comprises low-density waste made from fibres.

7. Element according to any one of claims 1 to 6, **characterised in that** the fibrous layers (2, 3) are co-needled so as to ensure the cohesion of the different layers (2, 3, 5, 7).

8. Element according to any one of claims 1 to 7, **characterised in that** at least one intermediate layer (5, 7) is made from polyvinyl butyral(PVB).

9. Method for producing an element according to any one of claims 1 to 8, **characterised in that** it comprises the following steps:
- providing at least one crushed material from the recycling,
- providing two fibrous layer rollers (2, 3),
- depositing said at least one crushed material by sprinkling on one of said rollers actuated by unwinding, so as to produce light zones (6a, 6b) and heavy zones (4), and covering the sprinkling by the other of said rollers actuated by unwinding,
- cutting a blank in the obtained complex,
- thermoforming said blank to the geometry of the element (1) to be obtained.
